# EUROPÄISCHE PATENTSCHRIFT

(11) **EP 3 590 977 B1**
(45) Veröffentlichungstag und Bekanntmachung des Hinweises auf die Patenterteilung: **30.09.2020**
(21) Anmeldenummer: 18182002.8
(22) Anmeldetag: 05.07.2018
(51) Int. Cl.: C08F 12/14, C08F 2/02, C08F 2/48, B29C 39/00, B01D 61/00

(54) **LÖSUNGSMITTELFREIES POLYMERISIERBARES GEMISCH, VERFAHREN ZUR HERSTELLUNG EINES FUNKTIONALISIERTEN POLYMERS UND FUNKTIONALISIERTES POLYMER**
SOLVENTLESS POLYMERIZABLE MIXTURE, METHOD FOR THE PREPARATION OF A FUNCTIONALISED POLYMER AND FUNCTIONALISED POLYMER
MÉLANGE POLYMÉRISABLE SANS SOLVANT, PROCÉDÉ DE PRODUCTION D'UN POLYMÈRE FONCTIONNALISÉ ET POLYMÈRE FONCTIONNALISÉ

(43) Veröffentlichungstag der Anmeldung: 08.01.2020
(73) Patentinhaber: Karlsruher Institut für Technologie, 76131 Karlsruhe (DE)
(72) Erfinder: Grün, Christoph, 76829 Landau (DE); Göckler, Tobias, 76275 Ettlingen (DE); Schepers, Ute, 53842 Troisdorf (DE); Rapp, Bastian, 76135 Karlsruhe (DE)
(74) Vertreter: Müller-Boré & Partner Patentanwälte PartG mbB

(56) Entgegenhaltungen:
- WO-A1-2017/092859
- JP-A- S62 212 403
- US-A- 5 304 618
- US-A- 5 376 503

## Beschreibung

Die vorliegende Erfindung betrifft ein lösungsmittelfreies polymerisierbares Gemisch, ein Verfahren zur Herstellung eines funktionalisierten Polymers aus dem lösungsmittelfreien polymerisierbaren Gemisch und ein aus dem Verfahren erhältliches funktionalisiertes Polymer.

Funktionalisierte Polymere und nano-/mikrostrukturierte Formkörper aus solchen funktionalisierten Polymeren finden in verschiedenen Bereichen der Technik Anwendung.

Zu nano-/mikrostrukturierten Polymer-Formkörpern zählen unter anderem poröse Membranen sowie Formkörper mit komplexeren Strukturen für mikrofluidische Anwendungen (z. B. Filtereinheiten, texturierte Oberflächen, Ventile, Nadeln), welche unter anderem im Bereich der Biowissenschaften (z. B. Gerüststrukturen zur Gewebezüchtung und für 3D-Zellkulturen) oder in mikrooptischen Anwendungen Einsatz finden.

Als einfaches Beispiel für nano-/mikrostrukturierte Polymer-Formkörper können poröse Polymermembranen genannt werden. Poröse Membranen finden eine breite Anwendung in Industrie und Forschung. Ein Einsatzgebiet von besonderer Bedeutung ist die Verwendung von porösen Polymermembranen für mechanische Trennverfahren (Filtration). Bei Filtrationsprozessen werden häufig Membranen mit Porengrößen von 0,1 µm bis 0,1 mm eingesetzt, um verschiedene Stoffe aus einem Gemisch abzutrennen. Mithilfe poröser Membranen ist es zudem möglich, Wasser aufzureinigen. Je nach Porengröße spricht man von Mikrofiltration (Porengröße: 100 nm bis 10 µm), Ultrafiltration (Porengröße: 1 nm bis 100 nm) oder Nanofiltration (Porengröße: 0,5 nm bis 10 nm).

Auch in der biologischen Forschung finden poröse Membranen Anwendung. In der Zellbiologie werden Membranen mit einer Porengröße von 1 bis 10 µm als Zellkultur-Einsätze (beispielsweise für *transwell*-Assays) zur Untersuchung von Zell-Zell-Interaktionen oder für Zellmigrations-Assays eingesetzt. Ein Themengebiet, das zur Zeit im Mittelpunkt des Interesses zahlreicher Forschungsgruppen steht, ist die Gewebezüchtung (*tissue engineering*). Deren Ziel ist die Entwicklung biologischer Gewebe als Ersatzgewebe oder als Grundlage für *in vitro* Systeme für Hochdurchsatz-Screenings (*high throughput screening*) im Bereich der Pharmaforschung oder der Grundlagenforschung. Das *tissue engineering* befasst sich hierfür mit dreidimensionaler Zellkultur, die in zahlreichen Anwendungen auf porösen Membranen basiert (z. B. *transwell*-Systeme oder verschiedene *organ-on-a-chip*-Systeme).

Geeignete Polymermaterialien für die im Stand der Technik verwendeten Membranen sind beispielsweise Polyethylen (PE), Polyethylenterephthalat (PET), Polycarbonat (PC) oder Polytetrafluorethylen (PTFE).

Nano- bzw. Mikrostrukturen können beispielsweise mithilfe des lonenspurätzens (*ion track etching*) erzeugt werden. Bei diesem Verfahren werden Polymerfolien zunächst mit beschleunigten Schwerionen beschossen. Durch den Beschuss erfolgt entlang der Flugbahn des Ions eine lokale Beschädigung der Folie. Das Folienmaterial wird anschließend durch nasschemisches Ätzen entfernt, wodurch Poren gebildet werden. Porosität, Porengröße und Porengeometrie können durch geeignete Wahl der Parameter für den lonenbeschuss und das Ätzen beeinflusst werden. Das lonenspurätzen wird auch im industriellen Maßstab eingesetzt. Zudem kann es beispielsweise zur Herstellung von *organ-on-a-chip*-Systemen verwendet werden. Derartige Systeme verfügen beispielsweise über einen gekrümmten, mikrofluidischen Kanal, der ein artifizielles Blutgefäß bildet (Ivannikov, D. In vitro Rekonstruktion verschiedener vaskulärer Barrieren. Cuvillier Verlag: Göttingen, 2016; Kappings, V-. Grün, C., Ivannikov, D., Hebeiß, I., Kattge, S., Wendland, I., Rapp, B.E., Hettel, M., Deutschmann, O., Schepers, U., vasQchip: A Novel Microfluidic, Artificial Blood Vessel Scaffold for Vascularized 3D Tissues, Advanced Materials Technologies, 2018; sowie EP 2 679 666 A1). Somit können mithilfe des lonenspurätzens gekrümmte Strukturen mit Poren erzeugt werden. Zur Herstellung gekrümmter poröser Formkörper, die beispielsweise in *organ-on-a-chip*-Systemen eingesetzt werden können, kann die SMART-Technologie verwendet werden (Giselbrecht, S., Gietzelt, T., Gottwald, E., Trautmann, C., Truckenmüller, R., Weibezahn, K. F., und Welle, A., 3D tissue culture substrates produced by microthermoforming of pre-processed polymer films, Biomed Microdevices 2006, 8, 191-199). Die SMART-Technologie schließt einen Schritt des Umformens einer Polymerfolie zu einem Mikrokanal ein, wobei die mindestens eine Pore nach dem Umformen in die Folie eingebracht wird. Die mindestens eine Pore kann durch lonenspurätzen erzeugt werden.

Nachteile der SMART-Technologie bestehen unter anderem darin, dass der Durchmesser des Mikrokanals abhängig von der Formtemperatur und dem Formdruck beim Umformen ist und durch minimale Änderungen dieser Parameter bereits erheblich variieren kann.

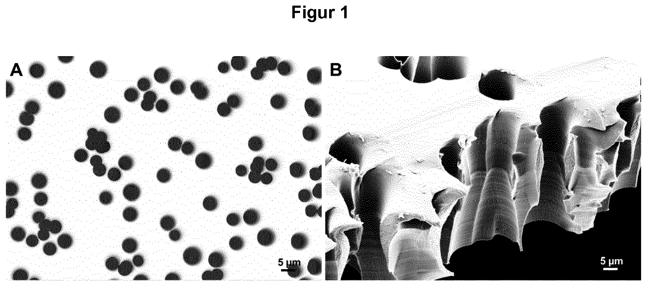

Zudem besteht ein Nachteil des Ionenspurätzens, welches üblicherweise im Rahmen der SMART-Technologie zum Einsatz kommt, darin, dass eine exakte Strukturierung damit nicht möglich ist. Wie Figur 1A entnommen werden kann, ist die Anordnung/Verteilung der Poren, bedingt durch den Schwerionenbeschuss, nicht gleichmäßig. Zudem sind die Porengeometrien beim lonenspurätzen schwer kontrollierbar. Darüber hinaus wird die Porengröße durch die Ätzkonditionen bestimmt.

Die Kontrolle der Parameter, welche die Struktur des vorstehenden gekrümmten Formkörpers mit Poren beeinflussen, erweist sich in der Praxis oft als sehr schwierig. Die Reproduzierbarkeit der Kanaldurchmesser und Porengrößen ist daher mit erheblichem Arbeitsaufwand verbunden. Wie bereits erwähnt, ist die Verteilung der Poren durch den Schwerionenbeschuss bestimmt und ist nicht gleichmäßig. Dies kann dazu führen, dass unter Umständen Poren fusionieren und so größere Poren als erwünscht generiert werden (siehe Figur 1A). An anderen Stellen sind deutlich weniger Poren vorhanden, was sich in der Anwendung in variierender Diffusion je nach Bereich des Kanals eines artifiziellen Blutgefäßes zeigt. Zudem haben die durch lonenspurätzen erzeugten Poren eine konische Form (siehe Figur 1B), was von Nachteil sein kann.

Eine weit verbreitete Technologie zur Herstellung von Formkörpern aus Polymeren ist das Spritzgießen. Hier können jedoch nur Formkörper mit Dimensionen von 100 µm oder mehr hergestellt werden. Eine Unterschreitung dieser Grenze ist kaum möglich, da mit hohen Einspritzdrücken gearbeitet wird, welche die Gussform bei kleineren Strukturen zerstören würde. Da außerdem bei diesem Verfahren mit hohen Temperaturen gearbeitet wird, ist das Spritzgießen auch mit Hinblick auf eine Funktionalisierung des Polymermaterials eingeschränkt. Eine Funktionalisierung der Oberfläche eines durch Spritzguss erhaltenen Formkörpers kann nur durch aufwändige zusätzliche Schritte erreicht werden.

Die Herstellung von Formkörpern mit kleineren Dimensionen ist durch Stereolithografie oder durch Laserdirektschreiben (*direct laser writing*) möglich. Hierbei werden photopolymerisierbare Monomere verwendet. Durch einen Laser wird der Formkörper Schicht für Schicht in der Monomerlösung durch Polymerisation gebildet. Bei diesem Verfahren sind Auflösungen im Nanometerbereich möglich, jedoch eignet sich das Laserdirektschreiben nicht für die Serienfertigung. Formkörper mit Funktionalisierung des Polymermaterials sind bisher kommerziell nicht erhältlich. Zudem sind Laserdirektschreiben und Stereolithografie sehr zeitintensiv und teuer und eignen sich daher nicht für die Serienproduktion.

WO 2017/092859 A1 beschreibt ein Verfahren zur Herstellung mikrostrukturierter Polymerkörper. Mit diesem Verfahren können jedoch keine porösen gekrümmten Folien oder Mikrokanäle erhalten werden. Außerdem werden hier Silikone, die für eine Anwendung als artifizielles Blutgefäß mit Nachteilen verbunden sind, sowie Thermoplasten verwendet.

Weitere Verfahren zur Herstellung poröser Membranen sind Elektrospinning oder photolithographische Prozesse. Letztere sind jedoch in der Auswahl der Materialien stark eingeschränkt.

Neben den vorstehend genannten Nachteilen in Bezug auf Verteilung, Größe und Geometrie der Poren sowie den Schwierigkeiten bei den Formprozessen ist ein weiterer Nachteil, den alle bisherigen Methoden zur Herstellung poröser Membranen teilen, dass oft nur herkömmliche Polymere eingesetzt werden können. Die Erzeugung funktionalisierter Oberflächen ist daher nur schwer möglich.

Eine Modifikation oder Funktionalisierung der Oberfläche eines Polymers bzw. eines Formkörpers aus einem Polymer (Polymer-Formkörper) ist für viele Anwendungsgebiete notwendig. Im Bereich des *tissue engineering* und der 3D-Zellkultur können modifizierte Oberflächen beispielsweise das Zellwachstum beeinflussen. Im Gebiet der Stammzellkultur kann durch Modifikation der Oberflächen die Zelldifferenzierung gesteuert werden. Auch bei den vorstehend genannten Trennverfahren (beispielsweise Filtration) spielen Oberflächenmodifikationen eine Rolle, da durch diese die Trennleistung signifikant erhöht beziehungsweise beeinflusst werden kann.

Mit herkömmlichen Verfahren ist die Erzeugung einer Funktionalisierung der Oberflächen nur erschwert möglich und benötigt mehrere Verfahrensschritte vor oder nach der Erstellung der Struktur. Üblicherweise sind für die Strukturierung (Formgebung) bzw. die Polymerisierung einerseits und die Funktionalisierung andererseits mindestens zwei separate Verfahrensschritte erforderlich.

Beispielsweise kann zunächst eine Polymerisierungsreaktion durchgeführt werden und eine chemische Funktionalisierung sich daran anschließen (Post-Funktionalisierung). Dabei kann den Polymeren vor der Funktionalisierung über die vorstehend erwähnten Verfahren eine bestimmte Form/Struktur verliehen werden. Eine anschließende typische Oberflächenmodifikation stellt beispielsweise die Plasmabehandlung dar. Das am häufigsten verwendete Gas zur Oberflächenaktivierung ist Sauerstoff. Durch die Plasmabehandlung lassen sich polare Gruppen auf der Oberfläche anbringen, welche die Hydrophilie erhöhen und anschließend weiter modifiziert werden können. Neben Hydroxylgruppen entstehen aber auch Carboxyl-, Aldehyd-, Keto- oder Epoxygruppen, weswegen die Oberflächenfunktionalisierung durch Plasmabehandlung unspezifisch ist. Mit neueren, aufwändigeren Verfahren, die auf der gepulsten Plasmaaktivierung beruhen, können Monofunktionalisierungen mit beispielsweise Carboxyl-, Hydroxyl-, Amino- oder Bromidgruppen erzeugt werden. Eine weitere Möglichkeit für die selektive Oberflächenmodifikation beruht auf der Silanchemie. Die durch Plasmaaktivierung erzeugten Hydroxylgruppen auf der Polymeroberfläche können durch funktionalisierte Silan-Modifizierer, wie z. B. 3-Aminopropyltriethoxysilan (APTES), weiter modifiziert werden. Nachteile dieser Verfahren bestehen darin, dass sie sehr aufwändig sind, und darin, dass Aminosilan-funktionalisierte Oberflächen häufig nur eine geringe Stabilität aufweisen, da sie in wässrigem Milieu leicht hydrolysieren.

Als Alternative zur Post-Funktionalisierung kann die chemische Funktionalisierung des Polymers direkt während des Polymerisationsvorgangs erreicht werden (*in-situ*-Funktionalisierung). Durch den Einsatz funktionalisierter Monomere im Rahmen einer Lösungsmittelpolymerisation erfolgt ein statistischer Einbau der funktionellen Gruppe ins Polymerrückgrat. Um beispielsweise funktionalisiertes Polystyrol (PS) herzustellen, wird neben Styrol zusätzlich ein kleiner prozentualer Anteil an funktionalisiertem Styrol verwendet und die Monomerlösung beispielsweise durch die Zugabe eines Radikalstarters polymerisiert. Ein Vorteil dieser Methode liegt darin, dass die Polymerisation und Funktionalisierung zu einem einzigen Arbeitsschritt zusammengefasst sind. Allerdings wird in diesem Verfahren ein Lösungsmittel verwendet, welches entfernt werden muss. Somit können mit vorstehendem Verfahren die Formgebung (Strukturierung) des Polymers und Funktionalisierung nicht zusammengefasst werden. Aufgrund der Gegenwart eines Lösungsmittels kann die Formgebung erst in einem sich anschließenden separaten Verarbeitungsschritt (Spritzgießen, Heißprägen, Fräsen, Thermoformen etc.) vorgenommen werden.

Eine Aufgabe der vorliegenden Erfindung besteht darin, ein Gemisch, woraus ein funktionalisiertes Polymer auf einfache Weise hergestellt werden kann, sowie ein entsprechendes Verfahren zur Herstellung des funktionalisierten Polymers bereitzustellen.

Die vorstehende Aufgabe wird durch die in den Ansprüchen gekennzeichneten Ausführungsformen gelöst.

In einem Aspekt betrifft die vorliegende Erfindung ein lösungsmittelfreies polymerisierbares Gemisch, welches mindestens ein Styrol-Monomer, mindestens ein Styrol-Vorpolymer und mindestens einen Photoinitiator umfasst, wobei das Gemisch eine Viskosität von 100 bis 10 000 mPa·s aufweist, zumindest ein Teil des mindestens einen Styrol-Monomers und/oder zumindest ein Teil des mindestens einen Styrol-Vorpolymers eine Funktionalisierung aufweist und das gewichtsgemittelte Molekülgewicht des Vorpolymers M_{w} 1500 bis 400 000 g/mol beträgt.

Gemäß der vorliegenden Erfindung dient allein das mindestens eine Styrol-Monomer als Lösungsmittel für das mindestens eine Styrol-Vorpolymer, d. h. das erfindungsgemäße polymerisierbare Gemisch ist lösungsmittelfrei. Dies bedeutet im Rahmen der vorliegenden Erfindung, dass ein (anderes) Lösungsmittel in einer Konzentration von höchstens 1000 ppm, vorzugsweise höchstens 10 ppm, vorzugsweise höchstens 1 ppm, bezogen auf die Gesamtmasse des Gemisches, enthalten ist, wobei unter einem solchen (anderen) Lösungsmittel ein solches verstanden wird, das imstande ist, zumindest eines von dem Styrol-Monomer, dem Styrol-Vorpolymer und dem Photoinitiator zumindest teilweise zu lösen und in einem Polymerisationsschritt nicht umgesetzt (das heißt, ein Lösungsmittel geht in einer Polymerisationsreaktion keine chemische Reaktion ein). Dadurch, dass in dem polymerisierbaren Gemisch erfindungsgemäß kein solches (anderes) Lösungsmittel enthalten ist, muss dieses nach dem Polymerisationsschritt nicht abgetrennt werden. Dadurch kann aus dem erfindungsgemäßen Gemisch besonders einfach und mit nur wenigen Verfahrensschritten das erfindungsgemäße funktionalisierte Polymer hergestellt werden. Das Gemisch kann in eine gewünschte Form gebracht und polymerisiert werden. So kann ein funktionalisiertes Polymer bzw. ein funktionalisierter Polymerformkörper erhalten werden, ohne dass ein separater Formgebungsschritt erforderlich ist.

Das erfindungsgemäße Gemisch ist polymerisierbar, insbesondere durch UV/VIS-Licht polymerisierbar. Das heißt, dass durch Einwirkung von UV/VIS-Strahlung eine Polymerisationsreaktion ausgelöst wird, worin das Gemisch zu dem erfindungsgemäßen funktionalisierten Polymer umgesetzt wird.

Der Begriff "UV/VIS-Licht" bzw. der Begriff "UV/VIS-Strahlung" bezeichnet erfindungsgemäß elektromagnetische Strahlung mit einer Wellenlänge von 200 bis 750 nm.

Das mindestens eine Styrol-Monomer weist eine Styrol-Grundstruktur auf und kann gegebenenfalls substituiert sein, beispielsweise mit einer C₁ bis C₄-Alkylgruppe. Vorzugsweise ist das Styrol-Monomer (abgesehen von der gegebenenfalls vorhandenen Funktionalisierung) unsubstituiert. Ein unsubstituiertes Styrol-Monomer ist (abgesehen von der gegebenenfalls vorhandenen Funktionalisierung) mit Styrol identisch.

Das mindestens eine Styrol-Vorpolymer weist eine Polystyrol-Grundstruktur, eine Block-Copolymer-Grundstruktur Polystyrol-Polybutadien-Polystyrol (SBS) bzw. Polystyrol-Polyisopren-Polystyrol (SIS) auf, wobei eine Polystyrol-Grundstruktur bevorzugt ist. Ist das Vorpolymer SBS bzw. SIS, beträgt der Massenanteil der Styrol-Wiederholungseinheiten vorzugsweise 5 bis 45 Gew.-%, besonders bevorzugt 15 bis 40 Gew.-%. Der Styrol-Anteil kann mittels UV-Spektroskopie über die Extinktion der Bande bei 261 nm und Kalibrierung mit einem Polystyrol-Standard ermittelt werden. Bei Kenntnis des Styrol-Anteils wird der entsprechende Anteil des Butadiens bzw. Isoprens berechnet. Alternativ kann die Zusammensetzung des Copolymers auch über NMR-Spektroskopie bestimmt werden. Ein Teil oder die Gesamtheit der Wiederholungseinheiten des Styrol-Vorpolymers kann/können gegebenenfalls substituiert sein, beispielsweise mit einer C₁ bis C₄-Alkylgruppe. Dabei ist bevorzugt, dass die Butadien- bzw. Isopren-Wiederholungseinheiten unsubstituiert sind. Vorzugsweise ist das Styrol-Vorpolymer (abgesehen von der gegebenenfalls vorhandenen Funktionalisierung) unsubstituiert. Sofern eine Funktionalisierung vorhanden ist, sind die funktionellen Gruppen vorzugsweise an die Styrol-Wiederholungseinheiten gebunden.

Gemäß der vorliegenden Erfindung weist zumindest ein Teil des mindestens einen Styrol-Monomers und/oder zumindest ein Teil des mindestens einen Styrol-Vorpolymers des lösungsmittelfreien polymerisierbaren Gemisches eine Funktionalisierung auf.

Ein funktionalisiertes (Vor)polymer weist ein Polymer-Grundgerüst auf, wobei zumindest ein Teil der Wiederholungseinheiten des Polymer-Grundgerüstes funktionelle Gruppen (Funktionalisierungen) aufweisen. Erfindungsgemäß kann jede Wiederholungseinheit funktionalisiert sein, wobei vorzugsweise nur ein Teil der Wiederholungseinheiten des (Vor)polymers funktionalisiert ist.

Gemäß einer bevorzugten Ausführungsform des lösungsmittelfreien polymerisierbaren Gemisches der vorliegenden Erfindung weist zumindest ein Teil des mindestens einen Styrol-Monomers eine Funktionalisierung auf, wobei das mindestens eine Styrol-Vorpolymer keine Funktionalisierung aufweist. In diesem Fall umfasst das mindestens eine Styrol-Monomer ein Styrol-Monomer mit Funktionalisierung und kann darüber hinaus ein Styrol-Monomer ohne Funktionalisierung umfassen. Vorzugsweise umfasst das mindestens eine Styrol-Monomer sowohl ein Styrol-Monomer mit Funktionalisierung als auch ein Styrol-Monomer ohne Funktionalisierung. Es ist besonders bevorzugt, dass das mindestens eine Styrol-Monomer aus (mindestens) einem Styrol-Monomer mit Funktionalisierung und (mindestens) einem Styrol-Monomer ohne Funktionalisierung besteht.

Gemäß einer weiteren bevorzugten Ausführungsform des lösungsmittelfreien polymerisierbaren Gemisches der vorliegenden Erfindung beträgt der Anteil des Styrol-Monomers mit Funktionalisierung an der Gesamtstoffmenge des mindestens einen Styrol-Monomers 0,01 bis 100 Mol-%, vorzugsweise 0,1 bis 99,9 Mol-%, besonders bevorzugt 1 bis 50 Mol-%, insbesondere bevorzugt 5 bis 20 Mol.-%.

Gemäß einer bevorzugten Ausführungsform der vorliegenden Erfindung umfasst die Funktionalisierung des funktionalisierten Styrol-Monomers oder des funktionalisierten Styrol-Vorpolymers eine Gruppe, ausgewählt aus Chlor, Brom, Isothiocyanat, Azid, Alkin, Thiol, Alken, vorzugsweise Norbornen, Amin, Amid, Alkohol, Keton, Aldehyd, Carbonsäure, Carbonsäureester, Ether, Nitril, Nitroso, Nitro und Azo. Diese funktionellen Gruppen weisen ein hervorragendes Gleichgewicht zwischen chemischer Stabilität und Reaktivität auf und eignen sich daher besonders für weitere Funktionalisierungen. Geeignet sind insbesondere Azide für Click-Reaktionen mit Alkinen, Alkine für Click-Reaktionen mit Aziden und für Thiol-In-Reaktionen, Thiole für Thiol-In-Click-Reaktionen und für Thiol-En-Click-Reaktionen mit Norbornen, für Thiol-Maleimid-Click-Reaktionen und für reversible Oxidation unter Ausbildung von Disulfidbrücken, Norbornen für Thiol-En-Click-Reaktionen, Carbonsäuren für Peptidkupplungen, Carbonsäureester, insbesondere Aktivester, für nukleophile Acylsubstitutionen, Amine für nukleophile Additionen/Substitutionen und für Peptidkupplungen, Alkohole für nukleophile Additionen/Substitutionen sowie für Oxidationen/Reduktionen, Isothiocyanate für Reaktionen mit Nukleophilen (bspw. Alkohole und Amine) und Ketone bzw. Aldehyde für elektrophile Additionen und für Oxidationen/Reduktionen. Diese funktionellen Gruppen können durch Methoden, die dem Fachmann bekannt sind, aus Halogen-, vorzugsweise Chlor- und Brom-Gruppen, erhalten werden.

Vorzugsweise besteht das erfindungsgemäße Gemisch aus dem mindestens einen Styrol-Monomer, dem mindestens einen Styrol-Vorpolymer und dem mindestens einen Photoinitiator sowie gegebenenfalls einem Vernetzungsmittel und gegebenenfalls einem Weichmacher. Dadurch kann sichergestellt werden, dass die Gesamtheit des Gemisches zu einem Polymermaterial umgesetzt wird, ohne dass es einer Nachbehandlung (z. B. Entfernen von Lösungsmittel) bedarf.

Die Funktionalisierung/funktionelle Gruppe kann über eine Verknüpfungsgruppe an das Styrol-Monomer, das Styrol-Vorpolymer bzw. das Polymer-Grundgerüst des erfindungsgemäßen funktionalisierten Polymers gebunden sein. Geeignete Verknüpfungsgruppen sind beispielsweise eine C₁ bis C₁₀-Alkylengruppe, welche gegebenenfalls substituiert sein kann, vorzugsweise eine C₁ bis C₄-Alkylengruppe, welche gegebenenfalls substituiert sein kann. In der C₁ bis C₁₀-Alkylengruppe bzw. der C₁ bis C₄-Alkylengruppe können ein oder mehrere Kohlenstoffatome durch ein Heteroatom, beispielsweise S oder O, ersetzt sein. Besonders bevorzugt ist die Verknüpfungsgruppe eine Methylen-Gruppe (-CH₂-), eine Methylenoxy-Gruppe (-CH₂O-) oder eine Oxymethylenoxy-Gruppe (-OCH₂O-).

Ausführungen in Bezug auf das funktionalisierte Styrol-Monomer und das funktionalisierte Styrol-Vorpolymer gelten entsprechend für das funktionalisierte Polymer und umgekehrt.

Gemäß der vorliegenden Erfindung beträgt die Viskosität des lösungsmittelfreien polymerisierbaren Gemisches 100 bis 10 000 mPa·s, besonders bevorzugt 200 bis 5000 mPa·s, insbesondere bevorzugt 300 bis 1000 mPa·s, am bevorzugtesten 450 bis 650 mPa·s. Dadurch hat das Gemisch eine besonders gute Verarbeitbarkeit. So kann es beispielsweise einfach in eine Form eingebracht werden. Insbesondere das Einbringen durch Einspritzen wird durch eine Viskosität innerhalb der vorstehend angegebenen Bereiche erleichtert.

Die Viskosität kann bei 25 °C mit einem Viskosimeter bestimmt werden. Beispielsweise kann ein Viskosimeter BROOKFIELD DV-II + Pro (Rotationsviskosimeter) der Firma BROOKFIELD Inc. (USA) verwendet werden. Als Messparameter geeignet sind eine konstante Rotationgeschwindigkeit von 0,5 rpm und ein Probenvolumen von 1 mL.

Das Styrol-Vorpolymer weist erfindungsgemäß ein gewichtsgemitteltes Molekülgewicht M_{w} von 1500 bis 400 000 g/mol, vorzugsweise 2000 bis 200 000 g/mol und besonders bevorzugt 3000 bis 150 000 g/mol auf. Sofern das Styrol-Vorpolymer eine Polystyrol-Grundstruktur aufweist, beträgt M_{w} vorzugsweise 1500 bis 5500, besonders bevorzugt 2500 bis 4500, insbesondere bevorzugt 3000 bis 4000 g/mol. Sofern das Styrol-Vorpolymer eine SBS-Grundstruktur aufweist, beträgt M_{w} vorzugsweise 10 000 bis 400 000, besonders bevorzugt 100 000 bis 200 000, insbesondere bevorzugt 130 000 bis 160 000 g/mol. Sofern das Styrol-Vorpolymer eine SIS-Grundstruktur aufweist, beträgt M_{w} vorzugsweise 10 000 bis 400 000, besonders bevorzugt 100 000 bis 200 000, insbesondere bevorzugt 130 000 bis 160 000 g/mol.

M_{w} kann erfindungsgemäß mittels Gelpermeationschromatographie (GPC) mit Toluol als Lösungsmittel bestimmt werden.

Weiterhin beträgt das Verhältnis des Molekülgewichts des Styrol-Monomers M zum gewichtsgemittelten Molekülgewicht M_{w} des Styrol-Vorpolymers M/Mw vorzugsweise 6,9·10⁻² bis 2,6·10⁻⁴, besonders bevorzugt 5,2·10⁻² bis 5,2·10⁻⁴, insbesondere bevorzugt 3,4·10⁻² bis 6,9·10⁻⁴. Innerhalb dieser Bereiche von M_{w} bzw. M/M_{w} hat das polymerisierbare Gemisch besonders günstige rheologische Eigenschaften. Dadurch kann beispielsweise nachstehend beschriebener Schritt (C) des Einbringens erleichtert werden.

Vorzugsweise beträgt das Verhältnis der Masse des Styrol-Vorpolymers zur Masse des Styrol-Monomers in dem polymerisierbaren Gemisch 1:10 bis 10:1, besonders bevorzugt 1:5 bis 5:1, insbesondere bevorzugt 1:2,5 bis 2,5:1. Auch durch Einstellen des vorstehenden Gewichtsverhältnisses auf diese Bereiche können die rheologischen Eigenschaften des erfindungsgemäßen Gemisches positiv beeinflusst werden.

Der Photoinitiator unterliegt erfindungsgemäß keiner besonderen Einschränkung, solange er in der Lage ist, durch Einwirken von UV/VIS-Licht eine Polymerisationsreaktion auszulösen. Es kann grundsätzlich jeder Photoinitatior, der zur Photopolymerisation von Styrol geeignet sind, verwendet werden. Der Photoinitiator kann beispielsweise Bis(2,4,6-trimethylbenzoyl)-phenylphosphinoxid (IRGACURE® 819) sein.

Der Massenanteil des Photoinitiators an der Gesamtmasse des polymerisierbaren Gemisches beträgt vorzugsweise 0,001 bis 5 Gew.-%, besonders bevorzugt 0,01 bis 2 Gew.-%, insbesondere bevorzugt 0,10 bis 1,0 Gew.-%.

Gemäß einer bevorzugten Ausführungsform enthält das erfindungsgemäße Gemisch ein oder mehrere Vernetzungsmittel. Grundsätzlich kann jedes Vernetzungsmittel, welches zur Vernetzung von Polystyrol bzw. von SBS oder SIS geeignet ist, verwendet werden. Vorzugsweise weist das Vernetzungsmittel eine Benzol-Grundstruktur auf und ist mit zwei Vinylgruppen substituiert (Divinylbenzol). Durch das Vernetzungsmittel können Querverbindungen zwischen linearen Polymerketten erzeugt werden, wodurch ein vernetztes funktionalisiertes Polymer erhalten werden kann. Eine derartige Vernetzung führt zu einer Erhöhung der Schlagzähigkeit, Formstabilität und Lösungsmittelresistenz des aus dem erfindungsgemäßen Gemisch erhältlichen funktionalisierten Polymers der vorliegenden Erfindung.

Der Massenanteil des Vernetzungsmittels an der Gesamtmasse des polymerisierbaren Gemisches beträgt vorzugsweise 0,1 bis 99,9 Gew.-%, besonders bevorzugt 0,5 bis 50 Gew.-%, insbesondere bevorzugt 1,0 bis 10 Gew.-%, am bevorzugtesten 1,0 bis 5,0 Gew.-%.

Gemäß einer bevorzugten Ausführungsform enthält das erfindungsgemäße Gemisch einen oder mehrere Weichmacher. Geeignete Weichmacher sind dem Fachmann bekannt. Dazu zählen beispielsweise Diethylphthalat und Tri-n-butylcitrat, wobei erfindungsgemäß auch davon verschiedene Weichmacher in dem Gemisch enthalten sein können. Der Massenanteil des Weichmachers an der Gesamtmasse des polymerisierbaren Gemisches beträgt vorzugsweise 0,1 bis 20 Gew.-%, besonders bevorzugt 0,5 bis 10 Gew.-%, insbesondere bevorzugt 1,0 bis 5 Gew.-%.

In einem weiteren Aspekt betrifft die vorliegende Erfindung ein Verfahren zur Herstellung eines funktionalisierten Polymers, umfassend einen Schritt (D) des Polymerisierens des erfindungsgemäßen lösungsmittelfreien polymerisierbaren Gemisches durch Einwirkung von UV/VIS-Strahlung.

Der Schritt des Polymerisierens unterliegt erfindungsgemäß keiner besonderen Einschränkung. Es wird durch Einwirkung von UV/VIS-Strahlung polymerisiert. Es kann jede zur Photopolymerisation geeignete UV/VIS-Strahlungsquelle benutzt werden. Vorzugsweise wird eine künstliche Strahlungsquelle, beispielsweise eine UV-Lampe oder eine Lampe, die sichtbares Licht (380 bis 750 nm) emittiert, verwendet. Geeignet ist beispielsweise die künstliche Strahlungsquelle OSRAM Ultra Vitalux 300W mit einer Intensität von 0,2 W/cm².

Die Dauer des Polymerisationsschrittes unterliegt keiner besonderen Einschränkung. Allgemein gilt, dass die Dauer von der Schichtdicke des polymerisierbaren Gemisches abhängt. Vorzugsweise wird für eine Dauer von 1 s bis 120 min, besonders bevorzugt 10 s bis 60 min, insbesondere bevorzugt 120 s bis 30 min UV/VIS-Licht eingestrahlt. Vor dem Schritt (D) des Polymerisierens kann das Gemisch in eine gewünschte Form gebracht werden.

Gemäß einer bevorzugten Ausführungsform wird das Gemisch vor Schritt (D) auf eine Oberfläche aufgebracht. Das heißt, im einfachsten Fall wird das erfindungsgemäße Gemisch dazu verwendet, um Oberflächenbeschichtungen vorzunehmen. Für eine gleichmäßige Verteilung eignet sich der Einsatz eines Spin-Coaters. Die Dicke der Beschichtung lässt sich über die Drehgeschwindigkeit sowie die Viskosität des photopolymerisierbaren Gemisches während des Spin-Coating-Prozesses modulieren. Vorzugsweise ist die Oberfläche eine ebene Oberfläche.

Gemäß einer weiteren bevorzugten Ausführungsform des erfindungsgemäßen Herstellungsverfahrens wird mit dem photopolymerisierbaren Gemisch eine vorgegebene Form durch Abgießen repliziert (Soft Lithographie, pour-and-cure-Verfahren). Das photopolymerisierbare Gemisch wird dazu in eine Form gegossen, welche die gewünschten Strukturmerkmale aufweist, in der Form mit Licht bestrahlt und ausgehärtet. Die entsprechenden Gussformen können dabei über verschiedene Herstellungsmethoden, darunter Soft Lithographie, Spritzguss, Fräsen und 3D-Druck, bereitgestellt werden.

Gemäß einer weiteren bevorzugten Ausführungsform des erfindungsgemäßen Herstellungsverfahrens wird das photopolymerisierbare Gemisch in einem laserbasierten 3D-Druckverfahren zur hochauflösenden Strukturierung wie der Stereolithographie (SLV) oder dem Laserdirektschreiben verwendet. Bei diesem Verfahren erfolgt die Photopolymerisation hochgradig ortsspezifisch direkt in dem erfindungsgemäßen Gemisch. Grundlage hierfür bildet der Einsatz eines Lasers, wodurch das Gemisch nur an ganz bestimmten Stellen belichtet und nur dort auspolymerisiert wird. Durch Variation der Position des Lasers erfolgt der Aufbau einer dreidimensionalen Gerüststruktur. Nach Beendigung des Druckprozesses wird das nicht auspolymerisierte Gemisch durch Waschen entfernt und so die polymere Gerüststruktur freigelegt. Bei diesem Verfahren sind Auflösungen bis in den Nanometerbereich möglich.

In einer weiteren bevorzugten Ausführungsform des Herstellungsverfahrens der vorliegenden Erfindung erfolgt eine Strukturierung mittels eines 3D-Druckverfahrens. Das 3D-Druckverfahren kann injektions- oder extrusionsbasiert sein. Derartige Verfahren sind dem Fachmann bekannt und bereits für viele Kunststoffe und Hydrogele etabliert. Das erfindungsgemäße photopolymerisierbare Gemisch wird dazu in eine Kartusche überführt und anschließend zur gewünschten Form verdruckt. Nachdem eine Schicht erfolgreich gedruckt wurde, wird das photopolymerisierbare Gemisch durch die Bestrahlung mit Licht ausgehärtet. Der Aufbau komplexer Gerüststrukturen erfolgt sukzessiv durch schichtweises Drucken (Layer-by-Layer-Verfahren). Die Auflösung hängt dabei von der verwendeten Nadel ab und liegt im Makro- bis Mikrometerbereich.

Gemäß einer bevorzugten Ausführungsform umfasst das erfindungsgemäße Verfahren zur Herstellung eines funktionalisierten Polymers die Schritte
(A) Bereitstellen einer Form mit Nano- und/oder Mikrostrukturen;
(B) Bereitstellen des erfindungsgemäßen lösungsmittelfreien polymerisierbaren Gemisches;
(C) Einbringen des erfindungsgemäßen lösungsmittelfreien polymerisierbaren Gemisches in die Form; und
(D) Polymerisieren des lösungsmittelfreien polymerisierbaren Gemisches durch Einwirkung von UV/VIS-Strahlung,
wobei das funktionalisierte Polymer ein nano- und/oder mikrostrukturierter Polymer-Formkörper ist. Somit handelt es sich bei dieser bevorzugten Ausführungsform um ein Verfahren zur Herstellung eines funktionalisierten Polymer-Formkörpers.

In Schritt (A) des bevorzugten Verfahrens zur Herstellung eines nano- und/oder mikrostrukturierten Polymer-Formkörpers wird eine Form mit Nano- und/oder Mikrostrukturen bereitgestellt. Die Form unterliegt keiner besonderen Einschränkung, solange sie dazu geeignet ist, dass das lösungsmittelfreie polymerisierbare Gemisch in die Form eingespritzt werden kann.

Erfindungsgemäß wird unter einer Nanostruktur ein Strukturelement mit einer Längendimension im Nanometerbereich (1,0 bis < 1000 nm) verstanden. Eine Mikrostruktur ist ein Strukturelement mit einer Längendimension im Mikrometerbereich (1,0 bis < 1000 µm). Vorzugsweise weist die Form Nano- und/oder Mikrostrukturen mit Längendimensionen von 10 nm bis 900 µm, besonders bevorzugt 100 nm bis 100 µm, insbesondere bevorzugt 500 nm bis 10 µm, auf. Erfindungsgemäß kann die Form neben den Nano- und/oder Mikrostrukturen auch Strukturen mit größeren Längendimensionen aufweisen. Erfindungsgemäß gilt ein Strukturelement bereits dann als Nano- oder Mikrostruktur, wenn eine der Längendimensionen (Höhe, Breite, Länge) des Strukturelementes einen Wert im Nanometerbereich oder Mikrometerbereich aufweist. Vorzugsweise weist die Form Strukturelemente auf, wovon sämtliche Längendimensionen (Höhe, Breite, Länge) im Nano- oder Mikrometerbereich liegen.

Die Gestalt der Nano- und/oder Mikrostrukturen unterliegt erfindungsgemäß keiner besonderen Einschränkung.

Gemäß einer bevorzugten Ausführungsform der vorliegenden Erfindung weist die Form Nano- und/oder Mikrostrukturen in der Gestalt von einer oder mehreren Vertiefungen auf. Die Vertiefung/Vertiefungen können beispielsweise eine Tiefe von 0,1 µm bis 1000 µm, vorzugsweise von 10 µm bis 500 µm, besonders bevorzugt von 100 µm bis 500 µm aufweisen. Die Breite der Vertiefungen kann beispielsweise 0,1 µm bis 2 mm, vorzugsweise von 10 µm bis 1000 µm, besonders bevorzugt von 100 µm bis 1000 µm, betragen. Die Länge der Vertiefungen kann variieren; möglich sind Längendimensionen der Vertiefungen von 0,1 µm bis 50 mm, vorzugsweise von 100 µm bis 20 mm, besonders bevorzugt von 500 µm bis 20 mm.

Die Form kann Nano- und/oder Mikrostrukturen in der Gestalt von einem oder mehreren Vorsprüngen aufweisen. Der Vorsprung / die Vorsprünge können beispielsweise eine Höhe von 10 nm bis 500 µm, vorzugsweise von 0,1 µm bis 100 µm, besonders bevorzugt von 5 µm bis 50 µm aufweisen. Die Breite der Vorsprünge kann beispielsweise 10 nm bis 100 µm, vorzugsweise von 0,1 µm bis 50 µm, besonders bevorzugt von 1 µm bis 10 µm betragen. Die Länge der Vorsprünge kann variieren; möglich sind Längendimensionen der Vorsprünge von 10 nm bis 100 µm, vorzugsweise von 0,1 µm bis 50 µm, besonders bevorzugt von 1 µm bis 10 µm.

Gemäß einer bevorzugten Ausführungsform der vorliegenden Erfindung weist die Form eine Mehrzahl von Vorsprüngen mit einer Breite von 1 µm bis 500 µm, vorzugsweise von 1 µm bis 100 µm, besonders bevorzugt von 1 µm bis 10 µm auf. Die Länge der Vorsprünge ist nicht eingeschränkt und kann beispielsweise von 1 µm bis 500 µm, vorzugsweise von 1 µm bis 10 µm betragen. Besonders bevorzugt ist in dieser Ausführungsform die Breite der Vorsprünge in etwa gleich der der Länge der Vorsprünge. "In etwa" bedeutet, dass die Breite das 0,9- bis 1,1-fache, vorzugsweise das 0,99- bis 1,01-fache der Länge beträgt. Insbesondere bevorzugt weisen die Vorsprünge einen abgerundeten, beispielsweise einen elliptischen oder kreisrunden Querschnitt auf. Mit einer Form, die derartige Strukturen aufweist, kann ein Formkörper mit Poren, beispielsweise eine poröse Membran, bereitgestellt werden, wobei die Anordnung und Form der Poren durch entsprechende Ausgestaltung der Form genau definiert werden kann.

Gemäß einer weiteren bevorzugten Ausführungsform der vorliegenden Erfindung weist die Form eine Vertiefung in Form eines Mikro-Halbkanals auf. Der Mikro-Halbkanal kann einen rechteckförmigen Querschnitt, gegebenenfalls mit abgerundeten Kanten, oder vorzugsweise einen runden, beispielsweise einen halbellipsen- oder halbkreisförmigen Querschnitt, aufweisen. Die Länge des Mikro-Halbkanals beträgt vorzugsweise 5 bis 50 mm, besonders bevorzugt 10 bis 30 mm. Die Breite des Mikro-Halbkanals beträgt vorzugsweise 0,05 bis 3 mm, besonders bevorzugt 0,5 bis 2 mm. Die Tiefe des Mikro-Halbkanals beträgt vorzugsweise 0,1 bis 900 µm, besonders bevorzugt 100 bis 500 µm.

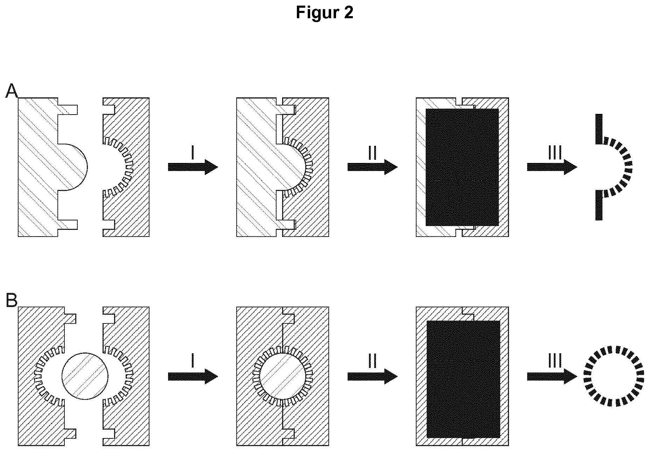

In einer besonders bevorzugten Ausführungsform sind in den Mikro-Halbkanal die vorstehend beschriebenen Vorsprünge, welche zur Erzeugung von Poren geeignet sein können, eingebracht. Durch eine derartig ausgestaltete Form können Formkörper mit Mikrokanalstrukturen mit Poren in der Wand des Mikrokanals hergestellt werden. Durch Aufeinanderlegen zweier Formkörper mit Mikro-Halbkanalstrukturen kann ein Mikrokanal erhalten werden (siehe Figur 2A). Ebenso ist es möglich, eine Form bereitzustellen, mit der in einem einzigen Verfahrensdurchgang, das heißt, ohne dass zwei Formkörper hergestellt werden müssen, ein Mikrokanal mit Poren erhalten werden kann (siehe Figur 2B). Somit kann durch das erfindungsgemäße Verfahren ein künstliches Blutgefäß mit vielseitigen Anwendungsgebieten in Industrie und Forschung hergestellt werden.

Zur leichteren Entformung kann die in dem erfindungsgemäßen Verfahren verwendete Form mehrteilig, vorzugsweise zweiteilig, aufgebaut sein. "Mehrteilig" / "zweiteilig" bedeutet hierbei, dass die Form aus mehreren / zwei Teilen zusammengesetzt ist. Durch Zerlegen der Form in ihre Teile kann der nano- und/oder mikrostrukturierte Polymer-Formkörper auf einfache Weise entformt werden. Die verschiedenen Teile der mehrteiligen Form müssen nicht zwangsläufig in Schritt (C) und (D) miteinander verbunden sein. Beispielsweise können ein oder mehrere Teile der Form zu einem äußeren Teil der Form zusammengefasst sein, wobei ein oder mehrere Teile der Form zu einem inneren Teil der Form zusammengefasst sein, ohne dass der äußere und der innere Teil miteinander verbunden sind. Beispielsweise kann ein innerer Teil der Form eine längliche Form haben und sich im Inneren des äußeren Teils der Form erstrecken.

Gemäß einer bevorzugten Ausführungsform der vorliegenden Erfindung ist ein Teil oder die Gesamtheit der Form zumindest teilweise für UV/VIS-Strahlung durchlässig. Ist die Form mehrteilig, können ein oder mehrere Teile der Form zumindest teilweise für UV/VIS-Strahlung durchlässig sein. Weist die Form einen inneren und einen (oder mehrere) äußeren Teil auf, kann beispielsweise der innere Teil zumindest teilweise für UV/VIS-Strahlung durchlässig sein. Schritt (D) kann in diesem Fall dadurch erfolgen, dass der innere Teil der Form von außen mit UV/VIS-Licht bestrahlt wird. Der UV/VISdurchlässige innere Teil leitet die UV/VIS-Strahlung in das Innere der Form, worin durch Einwirkung der UV/VIS-Strahlung das lösungsmittelfreie Gemisch auspolymerisiert. Ein hierfür geeigneter innerer Teil der Form kann beispielsweise ein Glasstab sein.

Zu geeigneten für UV/VIS-Strahlung zumindest teilweise durchlässige Materialien, aus denen die Form oder Teile davon aufgebaut sein können, zählen Glas, Polydimethylsiloxan (PDMS), Polymethylmethacrylat (PMMA), Polycarbonat (PC), Polyethylen (PE), Polypropylen (PP), Polyvinylchlorid (PVC), Polyamid (PA), Polyimid (CPI), Polyethylenterephthalat (PET), Polyethylenterephthalat Glykol (PETG) und Cycloolefin-Copolymere (COC), wobei PDMS, PMMA, COC und Glas bevorzugt sind.

Vorzugsweise kann zumindest ein Teil der Oberfläche der Form mit einem anti-adhäsiven Material beschichtet werden. Dadurch kann der funktionalisierte Formkörper nach erfolgter Photopolymerisation besonders einfach entformt werden. Dadurch wird die Gefahr einer Schädigung des funktionalisierten Formkörpers verringert. Darüber hinaus kann eine derartige Beschichtung die Lösungsmittelresistenz der Form gegenüber dem polymerisierbaren Gemisch erhöhen. Das anti-adhäsive Material ist vorzugsweise ein perfluoriertes Polymer, beispielsweise Polytetrafluoroethylen (PTFE), oder ist aus selbstassemblierenden Monoschichten (SAM), wie z. B. Tridecafluoro-1,1,2,2-tetrahydrooctyl)-1-trichlorosilan (TFS), aufgebaut. Zu weiteren geeigneten anti-adhäsiven Beschichtungen zählen Liquid Infused Substrate (LIS), Slippery Liquid Infused Porous Substrate (SLIPS) und Polysiloxan-Oberflächen.

Vor dem Schritt (D) des Polymerisierens kann gegebenenfalls ein Schritt des Entgasens des polymerisierbaren Gemisches durchgeführt werden. Beispielsweise kann durch Anlegen eines Vakuums entgast werden. Durch Entgasen kann die Gefahr von blasenförmigen Gaseinschlüssen minimiert werden.

Gemäß einer weiteren bevorzugten Ausführungsform wird die Form oder ein Teil davon aus einem wasserlöslichen Polymer gefertigt. Geeignete wasserlösliche Polymere sind beispielsweise Polyvinylalkohol (PVA), Butendiol-Vinylalkohol-Copolymer (BVOH), Polyethylenglykoldiacrylat (PEGDA), wobei PVA und BVOH bevorzugt sind. Durch Verwendung eines wasserlöslichen Polymers kann die Gefahr einer Beschädigung oder Zerstörung des Formkörpers beim Entformen minimiert werden. Somit können mit dem erfindungsgemäßen Verfahren selbst feinste und filigranste Strukturen erzeugt werden. Bei Verwendung einer Form oder eines Formteils aus einem wasserlöslichen Polymer erfolgt der bevorzugte Schritt (E) des Entformens durch Lösen der Form / des Formteils in einem wässrigen Lösungsmittel bzw. in Wasser.

Neben den bereits genannten umfassen weitere für die Form geeignete Materialen grundsätzlich alle formstabilen Materialen, die zur Ausbildung von Nano- bzw. Mikrostrukturen geeignet sind. Hierzu zählen insbesondere SU-8® (Fotolack der Firma Microchem Corp.), Ormocer®, IP-Fotolacke (IP-Dip, IP-L 780, IP-G 780, IP-S), AZ®-Fotolacke (AZ® MiR 701, AZ® 5214 AZ® 9260; IP- und AZ®-Fotolacke werden von der Firma Nanoscribe angeboten), Pentaerythritoltriacrylat (PETA), Polyetheretherketon (PEEK), Polytetrafluoroethylen (PTFE), Acrylnitril-Butadien-Styrol-Copolymere (ABS), Polycaprolacton (PCL), Polylactid (PLA), Polyglykolid (PGA), wobei SU-8®, IP-Fotolacke, PETA, PTFE und PEEK bevorzugt sind. Diese Materialien können in herkömmlicher Weise bearbeitet werden, beispielsweise durch Laserdirektschreiben, Softlithographie oder ähnliche, um die in dem erfindungsgemäßen Verfahren verwendete Form zu erhalten.

In Schritt (C) wird das polymerisierbare Gemisch in die Form eingebracht. Das Einbringen unterliegt keiner besonderen Einschränkung. Das Einbringen erfolgt vorzugsweise durch Einspritzen. Das Einbringen kann beispielsweise durch Eingießen mit einer Pipette, manuelles Einspritzen mit einer Spritze, durch Einspritzen mit einer Schnecke durch eine Düse, wie beim Spritzgießen von Thermoplasten, oder durch Einspritzen mit einen Kolben erfolgen, wobei mit Hinblick auf die Herstellung großer Stückzahlen das Einspritzen mittels Schnecke oder Kolben bevorzugt ist.

Gemäß einer bevorzugten Ausführungsform erfolgt das bevorzugte Einspritzen (C) unter einem Druck von 1 bis 2000 bar, besonders bevorzugt 1 bis 100 bar, insbesondere bevorzugt 1 bis 10 bar. Bei einem derartigen Einspritzdruck kann die Form vollständig von dem Gemisch ausgefüllt werden, ohne dass die Form einer zu großen Belastung ausgesetzt oder gar zerstört wird.

Unmittelbar vor dem Einbringen bzw. Einspritzen weist das polymerisierbare Gemisch vorzugsweise eine Temperatur von 10 bis 40 °C, besonders bevorzugt 15 bis 35 °C, insbesondere bevorzugt 18 bis 30°C auf. Bei einer derartigen Temperatur weist das polymerisierbare Gemisch günstige rheologische Eigenschaften auf, die den Vorgang des Einbringens/Einspritzens erleichtern.

Die Dauer von Schritt (C) unterliegt keiner besonderen Einschränkung. Mit Hinblick auf eine industrielle Fertigung ist eine kurze Dauer vorteilhaft. Vorzugsweise beträgt die Dauer von Schritt (C) 1 s bis 30 min, besonders bevorzugt 1 s bis 5 min, insbesondere bevorzugt 1 s bis 60 s.

In einer bevorzugten Ausführungsform der vorliegenden Erfindung umfasst das Verfahren zur Herstellung eines funktionalisierten Polymer-Formkörpers weiter einen Schritt (E) des Entformens, in dem der Polymer-Formkörper aus der Form genommen wird. An Schritt (E) kann sich ein Schritt des Modifizierens (F) anschließen.

Gemäß einer bevorzugten Ausführungsform schließt sich an den Schritt des Polymerisierens (D) ein Schritt des Modifizierens (F) der Polymeroberfläche an. Durch eine Modifikation wird ein Molekül kovalent an die Polymeroberfläche gebunden. Aufgrund der Funktionalisierung ist es möglich, die Oberfläche des Polymers / des Polymer-Formkörpers beispielsweise mit Biomolekülen wie Zuckern, DNS, RNS und/oder Peptiden/Proteinen zu modifizieren (d. h. diese kovalent an die Oberfläche zu binden). Ein derart modifiziertes Polymer bzw. modifizierter Polymer-Formkörper ist besonders für einen Array für das pharmakologische Hochdurchsatz-Screening geeignet.

Gemäß einer bevorzugten Ausführungsform erfolgt der Schritt des Modifizierens ortsspezifisch, das heißt nur an ausgewählten Stellen/Bereichen der Polymeroberfläche. Dies kann beispielsweise mit einem photolithographischen Verfahren, wie z. B. durch Thiol-In-Chemie, erfolgen. Beispielsweise können Alkin-modifizierte Polymeroberflächen hochselektiv nur an den gewünschten Stellen weiter modifiziert werden. Neben einer homogenen (nicht ortsspezifischen) Funktionalisierung können durch gezielte Belichtungszyklen (Laser, Photomaske) unterschiedliche Moleküle kovalent an die Polymeroberfläche gebunden werden. Dies erlaubt unter anderem eine einfache und kostengünstige Herstellung verbesserter Zellkulturmaterialien, Mikroarrays, Oberflächenbeschichtungen sowie elektronischer Bauteile.

Besonders bevorzugt erfolgt der Schritt des (ortsspezifischen) Modifizierens mit einer hydrophilen, vorzugsweise superhydrophilen Beschichtung und/oder mit einer hydrophoben, vorzugsweise superhydrophoben Beschichtung. Superhydrophobe Beschichtungen dienen beispielsweise als Antifouling-Beschichtungen oder werden bei ortsspezifischer Modifikation als Droplet-Mikroarrays verwendet.

In einem weiteren Aspekt betrifft die vorliegende Erfindung ein funktionalisiertes Polymer, erhältlich aus dem erfindungsgemäßen Verfahren. In Bezug auf das Polymer gelten die vorstehenden Ausführungen in Bezug auf das zugrunde liegende Herstellungsverfahren entsprechend. Gemäß einer bevorzugten Ausführungsform ist das funktionalisierte Polymer ein funktionalisierter nano- und/oder mikrostrukturierter Polymer-Formkörper.

In einer bevorzugten Ausführungsform weist der Formkörper einen Mikrokanal mit Poren in der Wand des Mikrokanals auf. Die Wanddicke beträgt vorzugsweise 10 µm bis 50 µm. Der Kanaldurchmesser beträgt vorzugsweise 50 bis 1000 µm. Die Porosität beträgt vorzugsweise 10° bis 5·10⁸ Poren/cm², besonders bevorzugt 10³ bis 10⁶ Poren/cm². Der arithmetisch gemittelte Porendurchmesser beträgt vorzugsweise 0,5 bis 10 µm.

In einer weiteren bevorzugten Ausführungsform weist das erfindungsgemäße Polymer Modifizierungen auf der Oberfläche auf. Besonders bevorzugt sind die Modifizierungen ortsspezifisch.

Figur 1 zeigt verschiedene Ansichten eines geätzten Mikrokanals (Ätzparameter: 70 °C, 5 N NaOH, 0,1% Dowfax 2A1™, 5,5 h). Figur 1A zeigt eine Draufsicht auf die Poren (Vergrößerung: 1000-fach). Figur 1 zeigt einen Querschnitt durch mehrere Poren (Vergrößerung: 1880-fach). In Figur 1A und 1B ist jeweils ein Maßstabsbalken mit der Beschriftung "5 µm" angegeben.

Figur 2 zeigt schematisch zwei konkrete Ausführungsbeispiele A und B des erfindungsgemäßen Verfahrens zur Herstellung eines nano- und/oder mikrostrukturierten Polymer-Formkörpers.

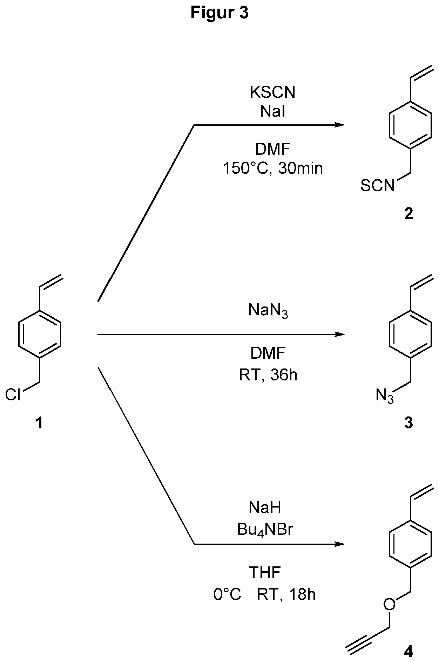

Figur 3 zeigt mögliche Syntheseverfahren für funktionalisierte Monomere.

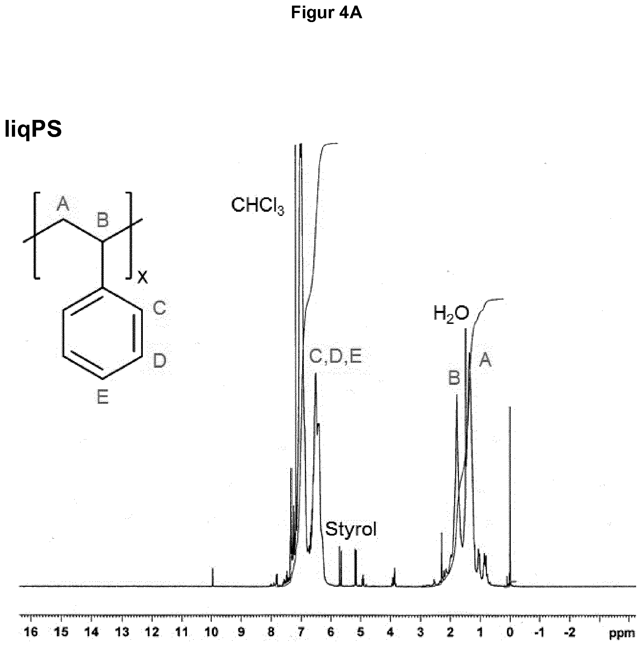

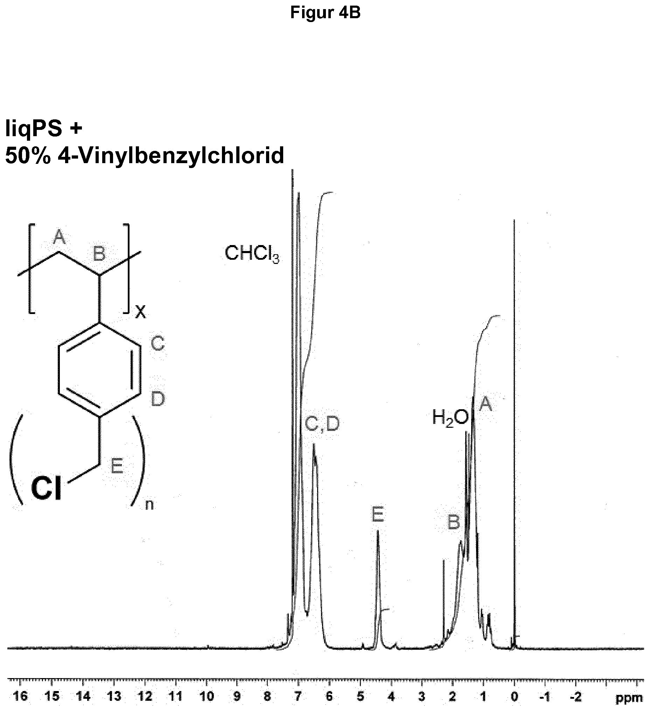

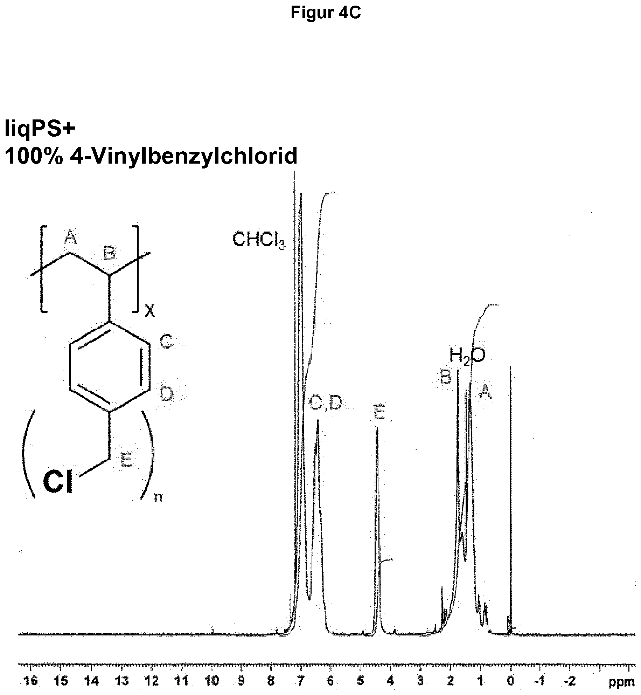

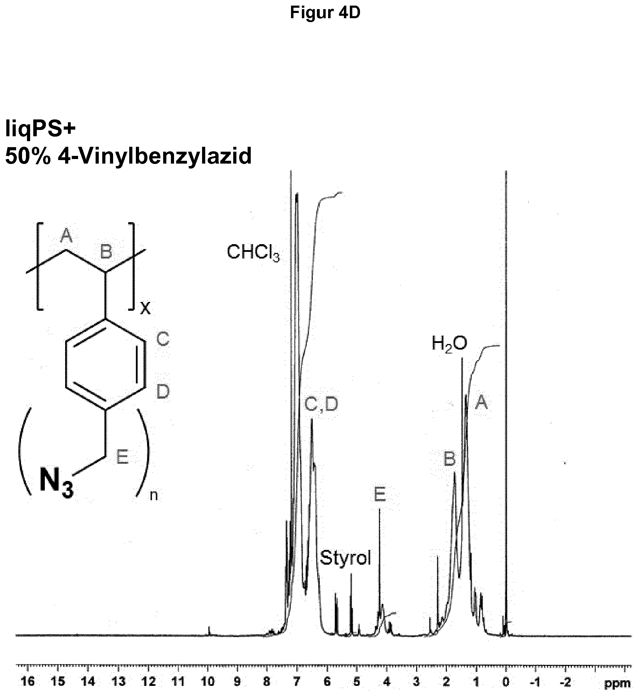

Figuren 4A bis D zeigen NMR-Spektren (Spektrometerfrequenz: 300 MHz, Lösungsmittel: CDCl₃) von in Beispiel 1 erhaltenen Polymeren.

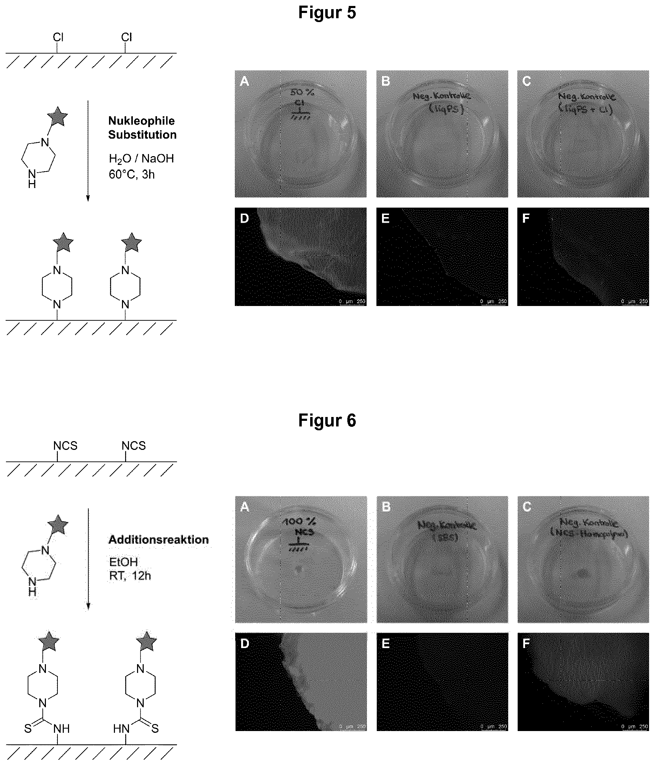

Figur 5 zeigt Ergebnisse aus Beispiel 1. Figur 5 A und D zeigt den Nachweis der Chlorid-Gruppen auf einer funktionalisierten liqPS-Polymerfolie aus Beispiel 1 durch Anknüpfung von Piperazinyl-Fluoresceinisothiocyanat (FITC). Figur 5 B und E zeigt eine Negativkontrolle mit Piperazinyl-FITC und einer unfunktionalisierten liqPS-Polymerfolie. Figur 5 C und F zeigt eine Negativkontrolle mit einer Chlorid-funktionalisierten liqPS-Polymerfolie ohne Piperazinyl-FITC. In Figur 5 D bis F ist jeweils ein Maßstabsbalken mit der Beschriftung "250 µm" angegeben.

Figur 6 zeigt Ergebnisse aus Beispiel 1. Figur 6 A und D zeigt einen Nachweis der Isothiocyanat-Gruppen des Homopolymers durch Anknüpfung von Piperazinyl-FITC. Figur 6 B und E zeigt eine Negativkontrolle mit Piperazinyl-FITC und unfunktionalisiertem SBS-Polymer. Figur 6 C und F zeigt eine Negativkontrolle mit einem Isothiocyanat-Homopolymer ohne Piperazinyl-FITC. In Figur 6 D bis F ist jeweils ein Maßstabsbalken mit der Beschriftung "250 µm" angegeben.

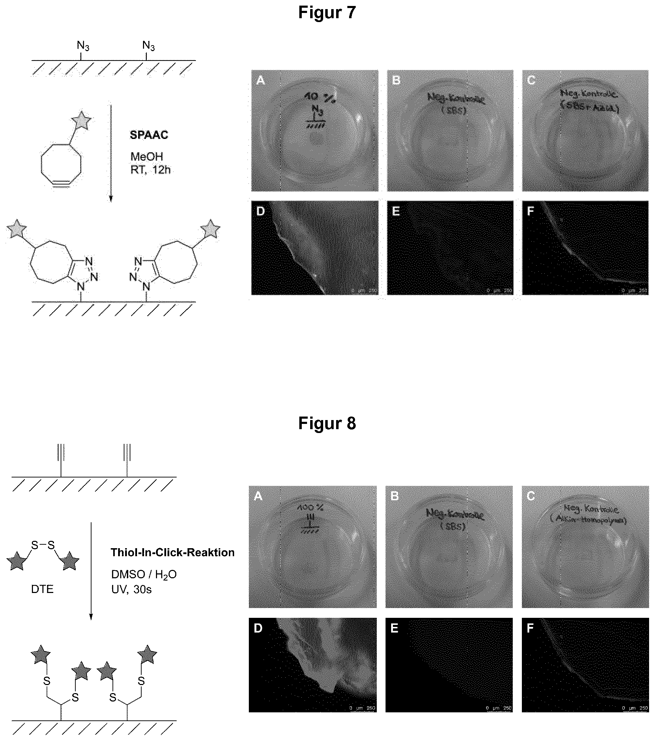

Figur 7 zeigt Ergebnisse aus Beispiel 1. Figur 7 A und D zeigt einen Nachweis der Azid-Gruppen auf der funktionalisierten liqSBS-Polymerfolie durch Kupplung von "Click"-FITC. Figur 7 B und E zeigt eine Negativkontrolle mit "Click"-FITC und einer unfunktionalisierten liqSBS-Polymerfolie. Figur 7 C und F zeigt eine Negativkontrolle mit einer Azid-funktionalisierten liqSBS-Polymerfolie ohne "Click"-FITC (Fluoresceinisothiocyanat). In Figur 7 D bis F ist jeweils ein Maßstabsbalken mit der Beschriftung "250 µm" angegeben.

Figur 8 zeigt Ergebnisse aus Beispiel 1. Figur 8 A und D zeigt den Nachweis der Alkin-Gruppen des Homopolymers durch "Click"-Reaktion mit BODIPY FL (Bor-Dipyrromethen (BODIPY) Fluorophor (FL)) L-Cystin und DTE (Dithioerythritol). Figur 8 B und E zeigt eine Negativkontrolle mit BODIPY FL L-Cystin, DTE (Dithioerythritol) und unfunktionalisiertem SBS-Polymer. Figur C und F zeigt eine Negativkontrolle mit dem Alkin-Homopolymer ohne BODIPY FL L-Cystin. In Figur 8 D bis F ist jeweils ein Maßstabsbalken mit der Beschriftung "250 µm" angegeben.

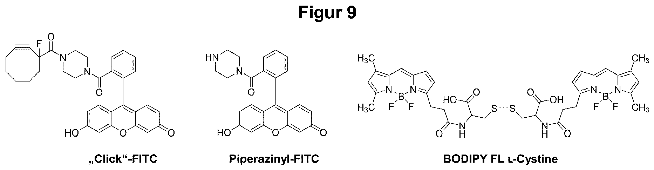

Figur 9 zeigt die chemischen Strukturformeln der verwendeten Fluorophore in den Figuren 7-10.

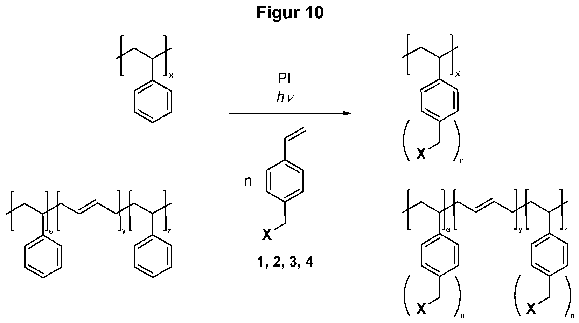

Figur 10 zeigt das auf einer Photopolymerisation basierende Syntheseverfahren zur Herstellung funktionalisierter Polymere aus Polystyrol bzw. Polystyrol-Polybutadien-Polystyrol (SBS)-Co-Blockpolymer.

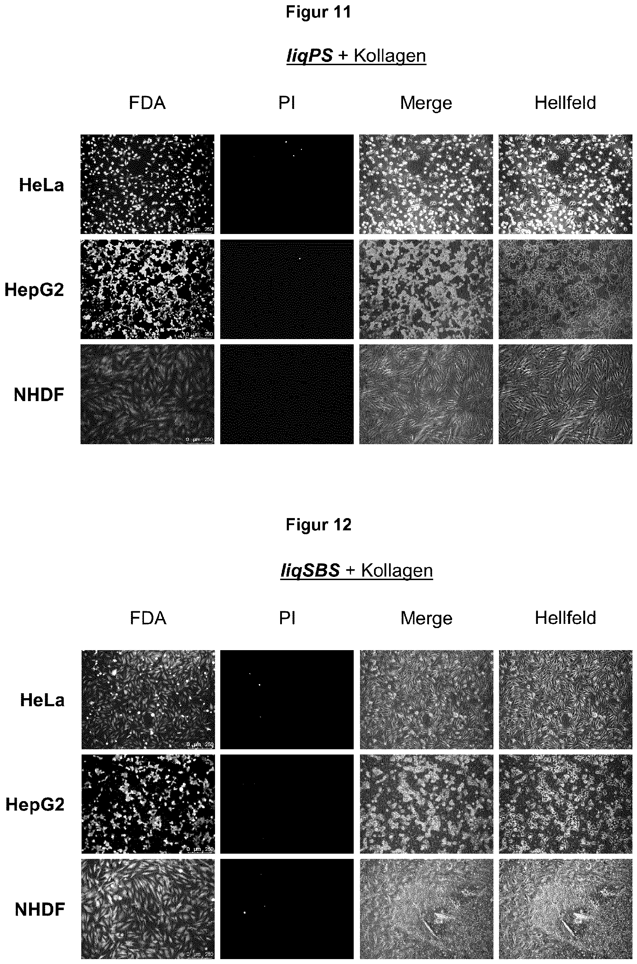

Figur 11 zeigt die Biokompatibilität des durch Photopolymerisation hergestellten Polystyrols an verschiedenen humanen Zelllinien (HeLa: humane Zervixkarzinomzellen, HepG2: humane Leberkarzinomzellen, NHDF: humane Fibroblasten). Zur Erhöhung der Hydrophilie und Zelladhäsion wurden die Polymeroberflächen mit Kollagen beschichtet. Ein Maßstabsbalken zeigt eine Länge von 250 µm an.

Figur 12 zeigt die Biokompatibilität des durch Photopolymerisation hergestellten Polystyrol-Polybutadien-Polystyrol (SBS)-Block-Copolymers an verschiedenen humanen Zelllinien (HeLa: humane Zervixkarzinomzellen, HepG2: humane Leberkarzinomzellen, NHDF: humane Fibroblasten). Zur Erhöhung der Hydrophilie und Zelladhäsion wurden die Polymeroberflächen mit Kollagen beschichtet. Ein Maßstabsbalken zeigt eine Länge von 250 µm an.

Die Evaluation der Viabilität (siehe Figur 11 und Figur 12) erfolgte über eine Lebend-/Tot-Färbung 24 h nach Aussaat der Zellen. Durch die Verwendung der beiden Fluorophore Fluoresceindiacetat (FDA) und Propidiumiodid (PI) wurden lebende und nekrotische Zellen visualisiert. FDA ist ein nicht-fluoreszentes Molekül, das von lebenden Zellen aufgenommen und durch Esterasen im Cytosol zu Fluorescein metabolisiert wird, welches eine grüne Fluoreszenz aufweist. PI dagegen kann die Zellmembran lebender Zellen nicht durchdringen. Der Farbstoff ist nur in der Lage, die geschädigte Membran toter Zellen zu passieren. Im Zellkern interkaliert PI in die DNA-Doppelhelix und emittiert ein rotes Fluoreszenzsignal.

### Beispiel

### Beispiel 1: Herstellung funktionalisierter Polymere

### Herstellung funktionalisierter Monomere

Als ein Chlor-funktionalisiertes Monomer wurde kommerziell erhältliches 4-Vinylbenzylchlorid verwendet (Chlor-funktionalisiertes Monomer 1). Daraus wurden unter den in Figur 3 angegebenen Bedingungen ("RT" = Raumtemperatur, nämlich 25°C) Isothiocyanat-funktionalisiertes Monomer 2, Azid-funktionalisiertes Monomer 3 und Alkin-modifiziertes Monomer 4 hergestellt.

### Herstellung Styrol-Vorpolymere

Unter folgenden Bedingungen wurde ein Polystyrol (PS)-Polymer (Styrol-Vorpolymer 1) hergestellt. Das Styrol-Vorpolymer 1 wurde durch eine radikalische Polymerisation von Styrol erhalten, die mittels des thermischen Radikalstarters AIBN Azobis(isobutyronitril) initiiert wurde.

### Syntheseprotokoll :

Unter Argon wurden 60 ml Styrol (54,6 g 524 mmol, 1,00 Äq.) und 2,13 g AIBN (13,0 mmol, 0,02 Äq.) in einem Zweihalskolben vorgelegt und in 60 ml Toluol gelöst. Gegebenenfalls können zuvor die im Styrol enthaltenen Stabilisatoren (in der Regel 4-*tert*-Butylcatechol oder Hydrochinon) durch zweimaliges Waschen mit einer 10 %igen (w/v) wässrigen Natriumhydroxid (NaOH)-Lösung entfernt werden, was hier nicht erfolgte. Anschließend wurde mit destilliertem Wasser (H₂O) neutral gewaschen. Das Reaktionsgemisch wurde unter Rückfluss für 5 h erwärmt (120°C). Nach Abkühlung auf Raumtemperatur wurde die Lösung filtriert (Porengröße ca. 10 µm) und das Lösungsmittel unter vermindertem Druck entfernt. Der polymere Feststoff expandierte dabei zu einem weißen Schaum, der anschließend mechanisch in kleine Stücke fragmentiert wurde. Als Produkt wurden 47,5 g Polystyrol (87 % Ausbeute, bezogen auf die eingesetzte Menge an Monomer) erhalten.

Styrol-Vorpolymer 2 (ein Polystyrol-Polybutadien-Polystyrol (SBS)-Block-Copolymer mit einem Massenanteil von 30 Gew.-% Styrol) wurde kommerziell bei Sigma-Aldrich erworben. (Daneben sind vom gleichen Hersteller SBS-Block-Copolymere mit Massenanteile von Styrol, die von 23 bis 96 Gew.-% reichen, erhältlich.)

### Herstellung funktionalisierter Polymere auf Basis von Styrol-Vorpolymer 1 (liqPS)

Polymerisierbare Gemische, bestehend aus 56,66 Gew.-% des Styrol-Vorpolymers 1, 42,49 Gew.-% eines Monomerengemisches und 0,85 Gew.-% eines Photoinitiators (IRGACURE® 819), wurden bereitgestellt. Die Monomerengemische bestanden entweder zu 100 Gew.-% aus dem funktionalisierten Monomer 1 oder aus einem Gemisch, bestehend aus 50 Gew.-% eines der funktionalisierten Monomere 1 oder 3 und 50 Gew.-% Styrol-Monomer.

Die Polymerisation erfolgte unter folgenden Bedingungen: Das polymerisierbare Gemisch wurde auf eine mit Silikonharz (PDMS) beschichtete Oberfläche gegeben und durch Bestrahlen mit UV/VIS-Licht (UV/VIS-Lichtquelle: OSRAM Ultra Vitalux 300W E27, Hersteller: Osram Licht AG, gekauft bei: Conrad Electronic (Deutschland)) ausgehärtet. Das ausgehärtete Polymer wurde anschließend chemisch charakterisiert.

Als Vergleichsbeispiel wurde unter den gleichen Bedingungen Polystyrol hergestellt. (nämlich aus einem Gemisch bestehend aus 56,66 Gew.-% Styrol-Vorpolymer 1, 42,49 Gew.-% Styrol-Monomer und 0,85 Gew.-% Photoinitiator (IRGACURE® 819). Die Aushärtung zum Polystyrol erfolgte durch Bestrahlen mit UV/VIS-Licht.

NMR-Spektren der erhaltenen Produkte sind in den Figuren 4A bis 4D gezeigt. Beim ausgehärteten Chlor- bzw. Azid-funktionalisierten Polymer wurde neben den typischen Signalen von Polystyrol zusätzlich ein charakteristischer Peak E erhalten, der auf die Methyleneinheit (-CH₂-) des Chlor- (1) bzw. Azid- (2) funktionalisierten Bausteins zurückzuführen ist. Da zudem keine Signale von ungesättigten Protonen (5 bis 6 ppm) erhalten wurden, weist dies einen kovalenten Einbau des Chlor- (1) bzw. Azid- (3) funktionalisierten Monomers in das Polystyrol-Polymer nach. Darüber hinaus ist von einem quantitativen Umsatz der Monomere auszugehen, da sich keine bzw. nur geringfügige Monomer-Rückstände (Styrol, 4-Vinylbenzylchlorid, 4-Vinylbenzylazid) nachweisen lassen.

Der Anteil an funktionalisiertem Styrol-Monomer im polymerisierbaren Gemisch ermöglicht eine Modulation des Funktionalisierungsgrades, wie sich beim Vergleich von 50 Gew.-% und 100 Gew.-% des Chlor-funktionalisierten Monomers 1 zeigt. Eine Verdopplung der zugegebenen Chlorid-Menge bewirkt erwartungsgemäß eine Verdopplung des erhaltenen Integrals.

Das Polymer, welches unter anderem aus dem Monomerengemisch, bestehend aus 50 Gew.-% des Chlor-funktionalisierten Monomers 1 und 50 Gew.-% Styrol-Monomer, erhalten wurde, wurde wie in Figur 5 gezeigt mit einem Piperazinyl-FITC-Rest modifiziert.

Das Ergebnis ist in Figur 5 gezeigt. Im Vergleich zu den beiden Negativkontrollen (liqPS ohne Chlor-Funktionalisierung + Piperazinyl-FITC, liqPS mit Chlor-Funktionalisierung - Piperazinyl-FITC) lässt sich für das Chlor-funktionalisierte Polymer eine deutlich erhöhte Fluoreszenz beobachten, die auf die kovalente Anbindung des Fluorophors Piperazinyl-FITC via nukleophile Substitution zurückzuführen ist. Damit wurde der Nachweis erbracht, dass sich die im Zuge der Photopolymerisation eingebauten Chlor-funktionalisierten Monomere 1 durch Reaktion mit Nukleophilen (hier: sekundäres Amin) weiter modifizieren lassen. Ein wesentlicher Vorteil gegenüber anderen funktionalisierten Styrol-Monomeren (Azid, Alkin, Isothiocyanat etc.) besteht darin, dass 4-Vinylbenzylchlorid kommerziell erworben werden kann und vor seinem Einbau via Photopolymerisation nicht erst chemisch modifiziert werden muss. Dadurch können sehr schnell und auf einfache Weise funktionalisierte Polymere auf Polystyrol-Basis hergestellt werden, die sich im nächsten Schritt chemisch weiter funktionalisieren lassen.

### Herstellung funktionalisierter Polymere (liqSBS) auf Basis von Styrol-Vorpolymer 2

Polymerisierbare Gemische, bestehend aus 28,45 Gew.-% des Styrol-Vorpolymers 2, 71,12 Gew.-% eines Monomerengemisches und 0,43 Gew.-% eines Photoinitiators (IRGACURE® 819), wurden bereitgestellt. Die Monomerengemische bestanden entweder zu 100 Gew.-% aus dem funktionalisierten Monomer 2 (Isothiocyanat) bzw. Monomer 4 (Alkin) oder aus einem Gemisch, bestehend aus 10 Gew.-% des funktionalisierten Monomers 3 (Azid) und 90 Gew.-% Styrol-Monomer.

Die Polymerisation erfolgte unter folgenden Bedingungen: Das polymerisierbare Gemisch wurde auf eine Silikonharz (PDMS)-beschichtete Oberfläche gegeben durch Bestrahlen mit UV/VIS-Licht (Produktname: OSRAM Ultra Vitalux 300W E27, Hersteller: Osram Licht AG, gekauft bei: Conrad Electronic (Deutschland) ausgehärtet (analog zu oben). Das ausgehärtete Polymer wurde anschließend chemisch charakterisiert

Das Polymer mit Isothiocyanat-funktionalisiertem Monomer 2, das Polymer mit Azidfunktionalisiertem Monomer 3 und das Polymer mit Alkin-funktionalisiertem Monomer 4 wurde jeweils wie in Figuren 8, 9 und 10 gezeigt modifiziert.

Die Ergebnisse sind in den Figuren und Figurenbeschreibungen angegeben. Die verschiedenen funktionellen Gruppen (Isothiocyanat, Azid, Alkin), die im Zuge der Photopolymerisation ins Polymer eingebaut wurden, bildeten den Ausgangspunkt für weitere chemische Modifikationen am Polymer. Hierbei wurden als Nachweis bewusst Fluorophore gewählt, um einerseits die Modifikation visuell sichtbar zu machen und andererseits auf die Verteilung der funktionellen Gruppen im Polymer zu schließen (lokal konzentriert vs. homogen verteilt). Isothiocyanat-Gruppen wurden über die Reaktion mit Nukleophilen (hier sekundäres Amin: Piperzinyl-FITC unter Bildung eines Thioharnstoffes) weiter funktionalisiert, Azid-Gruppen über eine Spannungsinduzierte Azid-Alkin-Click-Reaktion (SPAAC) mittels eines Alkins (hier: "Click"-FITC), Alkin-Gruppen über Thiol-In-Click-Reaktion mittels eines Thiols (hier: BODIPY FL L-Cystine + Reduktionsmittel Dithioerythritol) funktionalisiert. In allen drei Beispielen konnte im Vergleich zu den entsprechenden Negativkontrollen eine deutlich erhöhte Fluoreszenz nachgewiesen werden. Damit lassen sich alle angeführten funktionellen Gruppen chemisch weiter modifizieren. Zudem deutet das homogene Fluoreszenzsignal auf eine homogene Verteilung der funktionellen Gruppen auf der Polymeroberfläche hin. Die Figuren 7 bis 10 wurden wie folgt erhalten: Objektiv HI PLAN I 10x/0.22 DRY. Die Auswertung erfolgte durch die Leica LAS X (Maßstabsbalken: 250 µm).

Verwendetes Mikroskop: Leica DM IL LED (Hersteller: Leica Microsystems GmbH) Verwendetes Objektiv: Objektiv HI Plan I 10x/0.22 DRY Verwendete Software: LAS X (Hersteller: Leica Microsystems GmbH) Maßstabsbalken: 250 µm

## Patentansprüche

1. Lösungsmittelfreies polymerisierbares Gemisch, welches mindestens ein Styrol-Monomer, mindestens ein Styrol-Vorpolymer und mindestens einen Photoinitiator umfasst, wobei
das Gemisch eine Viskosität von 100 bis 10 000 mPa·s aufweist,
zumindest ein Teil des mindestens einen Styrol-Monomers und/oder zumindest ein Teil des mindestens einen Styrol-Vorpolymers eine Funktionalisierung aufweist und
das gewichtsgemittelte Molekülgewicht des Vorpolymers M_{w} 1500 bis 400 000 g/mol beträgt.

2. Lösungsmittelfreies polymerisierbares Gemisch nach Anspruch 1, wobei zumindest ein Teil des mindestens einen Styrol-Monomers eine Funktionalisierung aufweist und das mindestens eine Styrol-Vorpolymer keine Funktionalisierung aufweist.

3. Lösungsmittelfreies polymerisierbares Gemisch nach Anspruch 2, wobei der Anteil des Styrol-Monomers mit Funktionalisierung an der Gesamtstoffmenge des mindestens einen Styrol-Monomers 0,01 bis 100 Mol-% beträgt.

4. Lösungsmittelfreies polymerisierbares Gemisch nach einem der Ansprüche 1 bis 3, wobei
die Funktionalisierung eine Gruppe, ausgewählt aus Chlor, Brom, Isothiocyanat, Azid, Alkin, Thiol, Alken, vorzugsweise Norbornen, Amin, Amid, Alkohol, Keton, Aldehyd, Carbonsäure, Carbonsäureester, Ether, Nitril, Nitroso, Nitro und Azo, umfasst.

5. Verfahren zur Herstellung eines funktionalisierten Polymers, umfassend einen Schritt (D) des Polymerisierens des lösungsmittelfreien polymerisierbaren Gemisches nach einem der Ansprüche 1 bis 4 durch Einwirkung von UV/VIS-Strahlung.

6. Verfahren zur Herstellung eines funktionalisierten Polymers nach Anspruch 5, umfassend die Schritte
(A) Bereitstellen einer Form mit Nano- und/oder Mikrostrukturen;
(B) Bereitstellen eines lösungsmittelfreien polymerisierbaren Gemisches nach einem der Ansprüche 1 bis 4;
(C) Einbringen des lösungsmittelfreien polymerisierbaren Gemisches in die Form; und
(D) Polymerisieren des lösungsmittelfreien polymerisierbaren Gemisches durch Einwirkung von UV/VIS-Strahlung,
wobei das funktionalisierte Polymer ein nano- und/oder mikrostrukturierter Polymer-Formkörper ist.

7. Verfahren nach Anspruch 6, wobei die Nano- und/oder Mikrostrukturen der Form Längendimensionen im Bereich von 0,5 nm bis 500 µm aufweisen.

8. Verfahren nach Anspruch 6 oder 7, wobei
ein Teil oder die Gesamtheit der Form zumindest teilweise für UV/VIS-Strahlung durchlässig ist.

9. Verfahren nach einem der Ansprüche 6 bis 8, wobei
das Einbringen (C) durch Einspritzen unter einem Druck von 1 bis 2000 bar erfolgt.

10. Funktionalisiertes Polymer, erhältlich aus einem Verfahren nach einem der Ansprüche 5 bis 9.

## Claims

1. A solvent-free polymerizable mixture, comprising at least one styrene monomer, at least one styrene prepolymer, and at least one photoinitiator, wherein the mixture has a viscosity of 100 to 10,000 mPa·s,
at least part of the at least one styrene monomer and/or at least part of the at least one styrene prepolymer has a functionalization, and
the weight-average molecular weight of the prepolymer M_{w} is 1500 to 400,000 g/mol.

2. The solvent-free polymerizable mixture according to claim 1, wherein at least part of the at least one styrene monomer has a functionalization and the at least one styrene prepolymer does not have a functionalization.

3. The solvent-free polymerizable mixture according to claim 2, wherein the proportion of the styrene monomer with functionalization in the total amount of substance of the at least one styrene monomer is 0.01 to 100 mol%.

4. The solvent-free polymerizable mixture according to one of claims 1 to 3, wherein the functionalization comprises a group selected from chlorine, bromine, isothiocyanate, azide, alkyne, thiol, alkene, preferably norbornene, amine, amide, alcohol, ketone, aldehyde, carboxylic acid, carboxylic acid ester, ether, nitrile, nitroso, nitro and azo.

5. A method for producing a functionalized polymer, comprising a step (D) of polymerizing the solvent-free polymerizable mixture according to one of claims 1 to 4 by exposure to UV/VIS radiation.

6. The method for producing a functionalized polymer according to claim 5, comprising the steps of
(A) providing a mold with nano- and/or microstructures;
(B) providing a solvent-free polymerizable mixture according to one of claims 1 to 4;
(C) introducing the solvent-free polymerizable mixture into the mold; and
(D) polymerizing the solvent-free polymerizable mixture by exposure to UV/VIS radiation,
wherein the functionalized polymer is a nano- and/or micro-structured polymer molded body.

7. The method according to claim 6, wherein the nano- and/or microstructures of the mold have length dimensions in the range from 0.5 nm to 500 µm.

8. The method according to claim 6 or 7, wherein part or all of the mold is at least partially transparent to UV/VIS radiation.

9. The method according to one of claims 6 to 8, wherein introducing (C) takes place by injection under a pressure of 1 to 2000 bar.

10. A functionalized polymer, obtainable from a method according to one of claims 5 to 9.

## Revendications

1. Mélange polymérisable sans solvant, lequel comprend au moins un monomère de styrène, au moins un prépolymère de styrène et au moins un photoinitiateur, dans lequel
le mélange présente une viscosité allant de 100 à 10000 mPa·s,
au moins une partie du au moins un monomère de styrène et/ou au moins une partie du au moins un prépolymère de styrène ayant une fonctionnalisation, et
la masse moléculaire moyenne en poids du prépolymère Mw allant de 1500 à 400000 g/mol.

2. Mélange polymérisable sans solvant selon la revendication 1, dans lequel au moins une partie du au moins un monomère de styrène présente une fonctionnalisation et le au moins un prépolymère de styrène ne présente pas de fonctionnalisation.

3. Mélange polymérisable sans solvant selon la revendication 2, dans lequel une proportion de monomère de styrène avec fonctionnalisation dans la quantité totale de matière du au moins un monomère de styrène va de 0,01 à 100% en mole.

4. Mélange polymérisable sans solvant selon l'une des revendications 1 à 3, dans lequel
la fonctionnalisation comprend un groupe sélectionné parmi les suivants: chlore, brome, isothiocyanate, azoture, alkyne, thiol, alcène, de préférence les norbornène, amine, amide, alcool, cétone, aldéhyde, acide carboxylique, ester d'acide carboxylique, éther, nitrile, nitriso, nitro et azo.

5. Procédé de fabrication d'un polymère fonctionnalisé, comprenant une étape (D) de la polymérisation du mélange polymérisable sans solvant selon l'une des revendications 1 à 4 par l'effet d'un rayonnement UV/VIS.

6. Procédé de fabrication d'un polymère fonctionnalisé selon la revendication 5, comprenant les étapes suivantes:
(A) mise à disposition d'un moule présentant des nanostructures et/ou des microstructures;
(B) mise à disposition d'un mélange polymérisable sans solvant selon l'une des revendications 1 à 4;
(C) introduction du mélange polymérisable sans solvant dans le moule; et
(D) polymérisation du mélange polymérisable sans solvant par l'effet d'un rayonnement UV/VIS,
où le polymère fonctionnalisé est un corps moulé polymère nanostructuré et/ou microstructuré.

7. Procédé selon la revendication 6, dans lequel
les nanostructures et/ou microstructures du moule présentent des dimensions longitudinales dans l'intervalle compris entre 0,5 nm et 500 µm.

8. Procédé selon la revendication 6 ou 7, dans lequel
une partie ou la totalité du moule est au moins partiellement transparente à un rayonnement UV/VIS.

9. Procédé selon l'une des revendications 6 à 8, dans lequel l'introduction (C) s'effectue par injection sous une pression allant de 1 à 2000 bars.

10. Polymère fonctionnalisé obtenable à partir d'un procédé selon l'une des revendications 5 à 9.
